Europäisches Patentamt

European Patent Office

Office européen des brevets

(19)

(11) Publication number: **0 102 820
B1**

(12) **EUROPEAN PATENT SPECIFICATION**

(45) Date of publication of patent specification: **19.02.86**

(51) Int. Cl.⁴: **C 03 B 9/38**

(21) Application number: **83304985.1**

(22) Date of filing: **30.08.83**

(54) Mould arrangement for glassware forming machine.

(30) Priority: **03.09.82 GB 8225188**
**17.03.83 GB 8307462**

(43) Date of publication of application:
**14.03.84 Bulletin 84/11**

(45) Publication of the grant of the patent:
**19.02.86 Bulletin 86/08**

(84) Designated Contracting States:
**AT BE CH DE FR GB IT LI NL SE**

(56) References cited:
**EP-A-0 052 223**
**DE-C-3 040 310**
**DE-C-3 123 488**
**FR-A-2 103 648**
**FR-A-2 321 376**
**GB-A-2 011 128**
**US-A-3 666 433**
**US-A-3 860 407**

**Hütte, des Ingenieurs Taschenbuch, Band 1, 28.
Auflage, 1955, Verlag Wilhelm Ernst & Sohn,
Berlin, Seite 778**

(73) Proprietor: **EMHART INDUSTRIES, INC.
426 Colt Highway
Farmington Connecticut 06032 (US)**

(72) Inventor: **Foster, Thomas Vincent
10 Meaburn Close
Cantley Doncaster Sth. Yorkshire (GB)**
Inventor: **Jones, Stanley Peter
Strafford House Bride Church Lane
Tickhill Nr. Doncaster Sth. Yorkshire (GB)**

(74) Representative: **Drury, Peter Lawrence et al
Emhart Patents Department P.O. Box 88 Ross
Walk
Belgrave Leicester LE4 5BX (GB)**

Courier Press, Leamington Spa, England.

## Description

This invention is concerned with a mould arrangement for use in a cyclicly operating glassware forming machine, the arrangement comprising a mould comprising a bottom plate defining a bottom portion of a cavity of the mould in which molten glass is moulded in the operation of the machine, and two side portions defining side portions of the cavity, each side portion being movable in a cycle of operation of the machine to a first position thereof in which it engages the bottom plate and the other side portion to co-operate in defining the mould cavity so that moulding can take place and to a second position thereof in which the side portions are separated to allow moulded glass to be removed from the mould cavity, the side portions also defining cooling passages passing upwardly through the side portions through which air can pass to cool the side portions.

In a glass container manufacturing machine of the so-called "individual section" type, a number of container making units or sections are arranged side by side, are fed with glass from a common source, and feed their output to a common conveyor. Each of these sections has at least one parison mould in which a parison is formed from a gob of molten glass delivered to the mould, and at least one blow mould in which parisons are blown to the shape of the container. The blow mould comprises a stationary bottom plate which defines a bottom portion of a cavity of the mould and two side portions defining side portions of the cavity. The two side portions are mounted on supporting arms which are movable to move the side portions towards one another into a first, closed, position in which the side portions engage the bottom plate and each other so that a parison is enclosed in the cavity defined by the side portions and the bottom plate. The arms are also movable to move the side portions away from one another into a second, open, position to allow moulded articles to be removed from the mould.

Since the moulds of an individual section type machine absorb heat from the glass at a rate which is faster than the heat can be dissipated to the surrounding atmosphere without additional cooling, such moulds are supplied with cooling means which cool the mould so that it remains at a substantially constant average temperature during successive operations of the machine. Because the sections of an individual section type machine need to be close together, for reasons of glass supply, only very limited space is available around the mould for the provision of cooling means. One solution to this problem is to feed cooling air through the frame of the machine section to a vertical cooling stack which is provided with nozzles which direct the air on to the outside of the mould. This solution, however has the disadvantage that the arms supporting the side portions of the mould interfere with the flow of air to the mould and also it is difficult to provide differential cooling around the mould as is desirable. Furthermore, such cooling stacks are a source of undesirable noise. In another type of cooling means, cooling air is supplied through the supporting arms of the side portions of the mould to a chamber around the mould. This type has the disadvantage that it requires expensive machining of the arms, to allow both for the movement of the arms and for the flow of the cooling air. Furthermore, as a seal has to be provided between the arm and the side portion of the mould, delays occur in changing moulds and the cost of the mould is increased. It is also difficult to provide differential cooling around the mould. Attempts have also been made to cool moulds by passing cooling air through passages in the side portions thereof. Examples can be found in U.K. Patent Specification No. 1337292 and U.S. Patent Specification No. 4251253 (Figures 10 to 12). In these arrangements, air is brought through the supporting arms to the passages through pipes. Thus, expensive machining of the arms is required and also pipe connections are involved between the arms and the mould portions thereby causing delay to mould changes and increasing the cost of the moulds. Furthermore, in these arrangements the cooling air makes sharp changes of direction in the mould so that considerable resistance to air flow is created requiring the use of high pressure air to achieve adequate air flow. The use of high pressure air is undesirable because of the expense involved. Furthermore non-uniform air flow is created distorting the cooling effect and making it difficult to predict. Thus, it becomes difficult to predict where to position the cooling passages to achieve the optimum cooling effect. If the passages are not initially correctly positioned, the cooling effect can be adjusted by inserting plugs or insulating sleeves into the passages but this is a time-consuming trial-and-error method because the effects of the plugs and/or sleeves are again hard to predict.

It is an object of the present invention to provide a mould arrangement in which passages in the side portions of the mould can be supplied with cooling air at a substantially uniform pressure and with a uniform flow pattern.

The invention provides a mould arrangement for use in a cyclicly operating glassware forming machine, the arrangement comprising a mould comprising a bottom plate defining a bottom portion of a cavity of the mould in which molten glass is moulded in the operation of the machine, and two side portions defining side portions of the cavity, each side portion being movable in a cycle of operation of the machine to a first position thereof in which it engages the bottom plate and the other side portion to co-operate in defining the mould cavity so that moulding can take place and to a second position thereof in which the side portions are separated to allow moulded glass to be removed from the mould cavity, the side portions also defining cooling passages passing upwardly through the side portions through which air can pass to cool the side portions, characterised in that the cooling passages in each side portion each have an entrance in a bottom surface of that side portion and the mould arrangement also comprises a plenum chamber extending beneath the first or the second position of each side portion and having one or more exits which open upwardly and communicate, when the side portion is above the plenum chamber, either directly or through vertical passages with the entrances of the cooling passages so that air is supplied to each cooling passage at substantially the same pressure, the plenum chamber also having an entrance connected to air supply means operable to blow air into the plenum chamber.

In a mould arrangement according to the last preceding paragraph, air reaches the entrance of each of the cooling passages at substantially the same pressure, this being ensured by the plenum chamber. The term "plenum chamber" where used herein refers to a chamber whose exit or exits are sufficiently remote from its entrance and whose volume is sufficiently large that a substantially uniform pressure is created across the exit or exits of the chamber. Furthermore, the straight flow paths for the cooling air reduce non-uniform air flow therein to a minimum. Accordingly, it is possible to predict accurately the cooling effect of each passage and the distribution of cooling around the cavity can be controlled by positioning of the passages as determined by mathematical models constructed to obtain an optimum cooling distribution. Furthermore, the flow of cooling air is not interfered with by the arms supporting the side portions of the mould and the air does not pass through these supporting arms.

The passages in the side portions of the mould may be formed by bores through the side portions themselves or by spaces between fins of the side portions, in which case, the open side of the space may be closed by an external jacket attached to the side portion to prevent air escaping from the passage.

Although the air may be supplied to the cooling passages, when the side portions are in their first or their second position, the side portions are generally in their first position for a greater portion of the machine cycle than they are in their second position. Furthermore, when in their first position, the side portions engage one another making it easier for one plenum chamber to supply cooling passages in both side portions. Accordingly, it is advantageous if the mould arrangement comprises one plenum chamber for each mould of the machine which extends beneath the first position of both side portions of the mould and has exits which communicate with cooling passages in both side portions.

In order to achieve better control of the cooling by enabling the cooling period to be varied and also to prevent cooling air from impinging directly on molten glass when the mould is open, it is advantageous if the mould arrangement comprises valve means operable to open or close the entrance or the exits of the plenum chamber to cause mould cooling air to leave the plenum chamber for a predetermined period in each cycle of operation of the machine, during which period the exits communicate with the cooling passages.

In order to obtain even more uniform pressures at the entrance of the cooling passages, it is advantageous if the cross-sectional area of the plenum chamber transversely to the direction of air flow therein is at least three times the combined cross-sectional areas of the cooling passages supplied from the plenum chamber.

Since air chambers exist in the frames of conventional individual section machines (they are used to feed air to cooling stacks) and because much pipework is avoided thereby, it is advantageous if the air supply means is arranged to supply air to a chamber formed within a supporting frame of the machine, which chamber communicates with each plenum chamber of the arrangement.

To maximise air use, it is advantageous if each cooling passage extends substantially in a straight line between its entrance and an exit thereof to atmosphere so that the mass flow of air in the passage is determined by the cross-sectional area and length of the passage and the configuration of the entrance and exit of the passage and not by bends or inserts in the passage or valves associated with the passage.

In order to achieve more efficient cooling, it is advantageous if the Reynolds number for the air flowing through the cooling passages is arranged to be greater than 10,000. Preferably the Reynolds number should exceed 20,000. The Reynolds number is defined as the velocity of the air multiplied by the diameter of the passage divided by the kinematic viscosity of the air, the kinematic viscosity being the dynamic viscosity divided by the density. Since the air is heated in flowing through the cooling passage, the Reynolds number will vary along the passage. For example, for a passage of 7 mm diameter and 200 mm long with an entrance pressure of 500 mm of water (4903 Pa) and entrance temperature of 20°C, the Reynolds number would be between 28,000 and 23,000.

In order to provide suitable pressure in the plenum chamber, the air supply means is arranged to create a pressure of up to 2 lbs per square inch (1400 mm of water or 13729 Pa) at the exits of the plenum chamber.

Since different moulds may have different patterns of cooling passages, it may be desirable to change the position of the exit or exits of the plenum chamber and, to accommodate this, the exit or exits may be formed in a plate which is removably mounted on side wall portions of the plenum chamber. Thus, the plate is removable and can be replaced by a plate having a different pattern of exits therein.

In order to allow for height adjustment of the bottom plate, the bottom plate may be mounted on a bottom plate mechanism which is mounted for vertical adjustment on the supporting frame of the machine and the plenum chamber may also be mounted on the bottom plate mechanism. Thus, moulds of different heights can be accommodated by moving the bottom plate mechanism vertically. The bottom plate mechanism may be mounted on a slideway on the frame of the machine and the plenum chamber extend horizontally above the frame and have an entrance which receives the air supplied by the air supply means through a telescopic connection to the interior of the frame. Alternatively, the plenum chamber may extend downwardly in the bottom plate mechanism and communicate via the valve means with a chamber mounted on the bottom plate mechanism and supplied with air by the air supply means either through the frame of the machine or otherwise.

Where the machine is operating in the so-called "double gob mode", the arrangement comprises a further plenum chamber which extends beneath the side portions of a further mould and has an exit or exits which, when the side portions of the further mould are in their first, closed, or second, open, position, communicate with entrances of passages in the side portions of the further mould, and the air supply means is also arranged to supply mould cooling air to the further plenum chamber.

Where the machine is operating in the so-called "triple gob mode", the arrangement comprises two further plenum chambers each of which extends beneath the side portions of a mould and has an exit or exits which, when the side portions are in their first or second position, communicate with entrances of the passages in the side portions of their associated mould, and the air supply means is arranged to supply mould cooling air to each of the plenum chambers. In this case, two of the plenum chambers may receive their air through telescopic connections to the interior of the frame while the remaining chamber may extend downwardly and receive its air supply from a further chamber.

There now follow detailed descriptions, to be read with reference to the accompanying drawings, of four mould arrangements which are illustrative of the invention. It is to be understood that the illustrative mould arrangements have been selected for description by way of example and not of limitation of the invention.

In the drawings:

Figure 1 is a side elevational view of the first illustrative mould arrangement with parts broken away to show the construction;

Figure 2 is a plan view with parts broken away of the first illustrative mould arrangement with the mould thereof removed, the direction of view of Figure 1 is indicated by the arrow I in Figure 2;

Figure 3 is a partial side elevational view of the second illustrative mould arrangement with parts broken away to show the construction;

Figure 4 is a vertical cross-sectional view of the third illustrative mould arrangement;

Figure 5 is a view similar to Figure 4 showing the fourth illustrative mould arrangement; and

Figure 6 is a view taken on the line VI—VI in Figure 5.

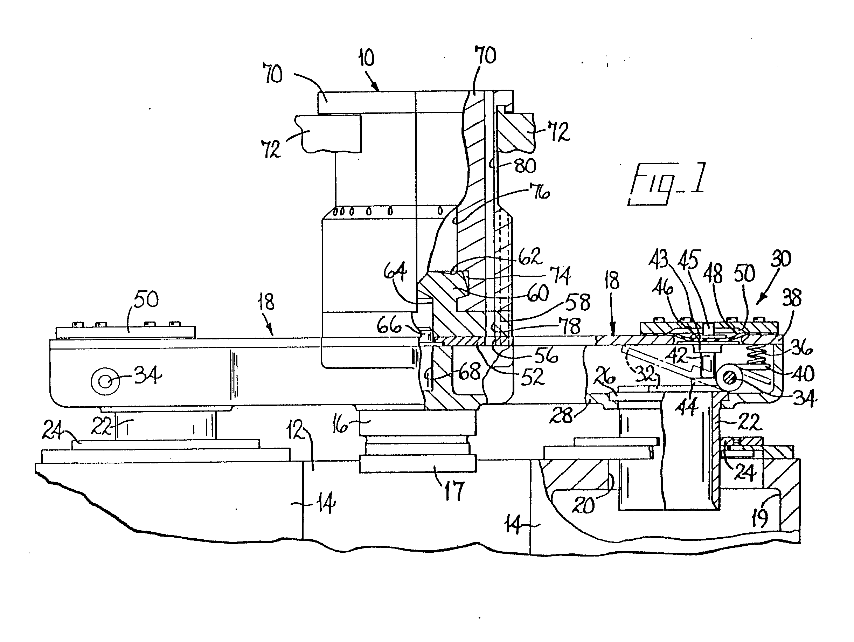

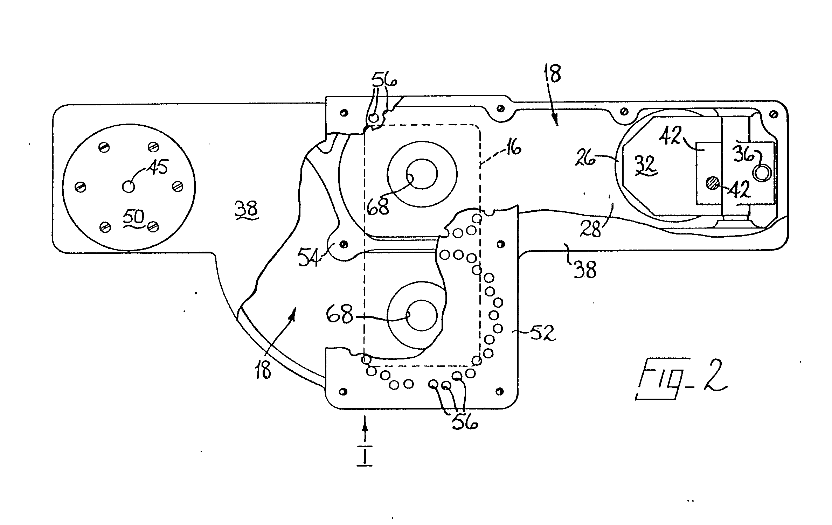

The first illustrative mould arrangement (shown in Figures 1 and 2) comprises two identical moulds 10 arranged side by side along a longitudinal axis of a section of a cyclicly operating glassware forming machine of the individual section type (only one of the moulds 10 is visible in Figure 1). The first illustrative mould arrangement is mounted on the frame 12 of the machine and is supplied with cooling air through two hollow arms 14 of the frame 12 which are disposed transversely of one of the moulds 10.

An adaptor plate 16 having a fixing 17 of the first illustrative mould arrangement is mounted by clamping means (not shown) engaging the fixing 17 on a bottom plate mechanism (not shown) which is vertically adjustable on the frame 12 in a well-known manner. The adaptor plate 16 has the function of distributing vacuum ducts (not shown) to the moulds 10 which are directly above the plate 16 and of supporting two plenum chambers 18 of the mould arrangement. Each plenum chamber 18 extends in a horizontal plane from above one of the arms 14 and across the adaptor plate 16 beneath an associated one of the moulds 10. One of the plenum chambers 18 extends transversely of the section while the other extends transversely away from its arm 14 and then bends around the other plenum chamber 18 to reach the adaptor plate 16 (see Figure 2).

Each of the plenum chambers 18 is supplied with air under pressure by air supply means. The air supply means comprises blowing means in the form of a fan (not shown) which operates continuously, when the machine is in operation, to blow air into a chamber 19 formed in the interior of the frame 12 and in particular in the interior of the hollow arm 14. Each of the arms 14 has an opening 20 at the top thereof into which a tube 22 is telescopically received. The tube 22 serves to connect the chamber 19 to the plenum chamber 18 and is movable to accommodate changes in the height of the plenum chamber 18. A sealing ring 24 closes the gap between the tube 22 and the arm 14 but allows vertical movement of the tube 22 and limited sideways movement thereof. The upper end of the tube 22 has an external flange 26 which is received within the plenum chamber 18 in a recess in a bottom wall 28 of the plenum chamber 18.

The air supply means also comprises a valve 30 which provides valve means via which the chamber 19 communicates with the plenum chamber 18. The valve 30 therefore acts to open or close an entrance to the plenum chamber 18. The valve 30 is controlled by electronic control means of the machine so that it is open only during a predetermined period of each cycle of operation of the machine during which period cooling is applied to the mould 10 associated with the plenum chamber 18. The valve 30 is a flap valve which operates to open or close the top of the tube 22. The valve 30 comprises a flap 32 which is mounted for pivoting movement about an axis 34 between a closed position (shown in solid line in Figure 1) in which the flap 32 closes the top of the tube 22 and an open position (shown in broken line in Figure 1). A spring 36 acts between an upper wall 38 of the plenum chamber 18 and a rearward extension 40 of the flap 32 to urge the flap 32 into its open position while a diaphragm piston and cylinder arrangement is operable to move the flap 32 into its closed position by pressing downwards on an upward extension 44 of the flap 32. The diaphragm piston and cylinder arrangement comprises a piston 42 which has a head 43 which is secured by a nut 46 to a diaphragm 48 of a pneumatic cylinder 50. A pin 45 passes through the diaphragm 48 and is received in a recess 42 so that the pin 45 serves to guide the motion of the piston 42. When air under pressure is introduced into the cylinder 50, the diaphragm 48 is pressed downwards taking with it the piston 42 which then presses down on the extension 44 of the flap 32. The use of a flap valve of this type operated by a diaphragm piston and cylinder arrangement saves space particularly in the vertical direction.

Above the adaptor plate 16, the tops of the two plenum chambers 18 are closed by a common sealing plate 52 which abuts the upper walls 38. The sealing plate 52 is screwed to side walls 54 (Figure 2) of the plenum chambers 18 and is hence readily removable. The sealing plate 52 has passages 56 passing vertically upwards therethrough which form upwardly opening exits through which air can leave the plenum chambers 18.

Each of the moulds 10 of the first illustrative mould arrangement comprises a bottom plate 58 mounted on top of the sealing plate 52. Each bottom plate 58 has a raised section 60 with an upper surface 62 which defines a bottom portion of a cavity of the mould 10 in which molten glass is moulded in the operation of the machine. Each bottom plate 58 has an internal chamber 64 from which vacuum can be applied, in conventional manner, to the mould 10. The chamber 64 is connected, via a floating sealing member 66 located in a hole in the sealing plate 52, to a tube 68 which passes upwardly through the plenum chamber 18 to connect the bottom plate 58 to the adaptor plate 16. Vacuum can thus be applied through the tube 68 to the bottom plate 58.

Each of the moulds 10 also comprises two side portions 70 defining side portions of the mould cavity. The side portions are mounted on supporting arm 72 (only a portion of each arm 72 is shown in Figure 1). The arms 72 are movable by moving means (not shown), in conventional manner, so that each side portion is movable in a cycle of operation of the machine into a first, closed, position thereof (shown in Figure 1) in which it engages the bottom plate 58 and the other side portion to co-operate in defining the mould cavity so that moulding can take place or away from the other side portion into a second, open, position thereof in which the side portions are separated to allow moulded articles to be removed from the mould cavity. The side portions 70 move above the plenum chambers 18 which extend in a horizontal plane beneath the side portions 70 and in particular beneath their first, closed, positions. When in their first, closed, position, the side portions 70 engage the bottom plate 58 with the section 60 of the bottom plate 58 being received in groove 74 in the side portions 70. When in their closed position, the side portions 70 also engage one another and surfaces 76 thereof co-operate with the surface 62 to define the mould cavity.

The bottom plate 58 has vertical passages 78 therein with which the exits 56 through the sealing plate 52 communicate so that cooling air flows from the exits 56 into the passages 78, the passages 78 passing vertically upwards through the bottom plate 58. These passages 78, when the side portions 70 are in their first, closed, position above the plenum chamber (see Figure 1), communicate with cylindrical longitudinal cooling passages 80 defined by the side portions 70 of the mould 10. The passages 80 each have an entrance in a bottom surface of the side portion 70 and pass upwardly through the portion 70 so that each cooling passage 80 extends substantially in a straight line between its entrance and an exit thereof to atmosphere. Thus, air flows from the passages 78 into the passages 80 and up through the passage 80. The passages 80 are distributed around the mould 10 so that air passing therethrough from the plenum chamber 18 has a desired cooling effect on the mould 10. The passages 80 are formed by circular bores in the portions 70 and may be distributed as required to achieve the desired cooling effect. In the first illustrative mould arrangement, the passages 80 are distributed about a circle about a central axis of the mould cavity (see Figure 2).

In the operation of the first illustrative mould arrangement, when the side portions 70 are in their first, closed, position, the air pressure is removed from the cylinders 50 allowing the flaps 32 to move to their open positions and air under pressure to enter the plenum chambers 18. The air supply means is arranged to create a pressure above atmospheric pressure of up to 2 lbs per square inch (1400 mm of water or 13729 Pa). The air leaves the chambers through the exits 56 and the passages 78 and 80 cooling the mould 10 as it passes therethrough. After a predetermined period, which may or may not be the same for each mould, air under pressure is applied to the cylinder 50 closing the flap 52 and cutting off the supply of air. The predetermined period may be varied at will to alter the cooling effect achieved. Although in the first illustrative mould arrangement the sealing plate 52 has one hole 56 for each of the passages 78 and 80, in modifications of the first illustrative mould arrangement, the plate 52 may have slots which provide access for air to more than one of the passages 78 and 80 and indeed the plenum chamber 18 may have only one exit accommodating all the passages 78 and 80. The plenum chambers 18 are designed so that the entrance thereof is sufficiently remote from the exits thereof that a substantially uniform pressure is achieved across the entrances of the passages. The exits are upwardly facing and air leaving the plenum chamber 18 can flow in a straight path up the passages 78 and 80 thereby reducing non-uniform air flow to a minimum.

The plenum chambers 18 are constructed so that air is supplied to each cooling passage 80 at substantially the same pressure. To this end the entrance of each plenum chamber 18 is sufficiently remote from the exits and the volume thereof is sufficiently large to achieve this effect. It is found to be desirable if the cross-sectional area of the plenum chamber 18 transversely to the direction of air flow therein is at least three times the combined cross-sectional areas of the cooling passages 80 supplied from the plenum chamber. In the first illustrative mould arrangement, each plenum chamber 18 supplies 32 cooling passages of 6 mm diameter. This gives a combined cross-sectional area of 905 sq. mm while the plenum chamber is 37 mm high and 80 mm wide giving a cross-sectional area of 2960 sq. mm.

In the first illustrative mould arrangement, the velocity of air flow through the passages 80 is determined by the cross-sectional area and length of the passage since there are no other substantial resistances to the air flow. This makes practical the use of low pressure air which can readily be supplied by simple fans as used in conventional machines for supplying cooling stacks. It is also easy to achieve a Reynolds number for the air flowing through the cooling passages 80 in excess of 10,000. Furthermore, the behaviour of the air can readily be predicted allowing accurate positioning of the passages 80.

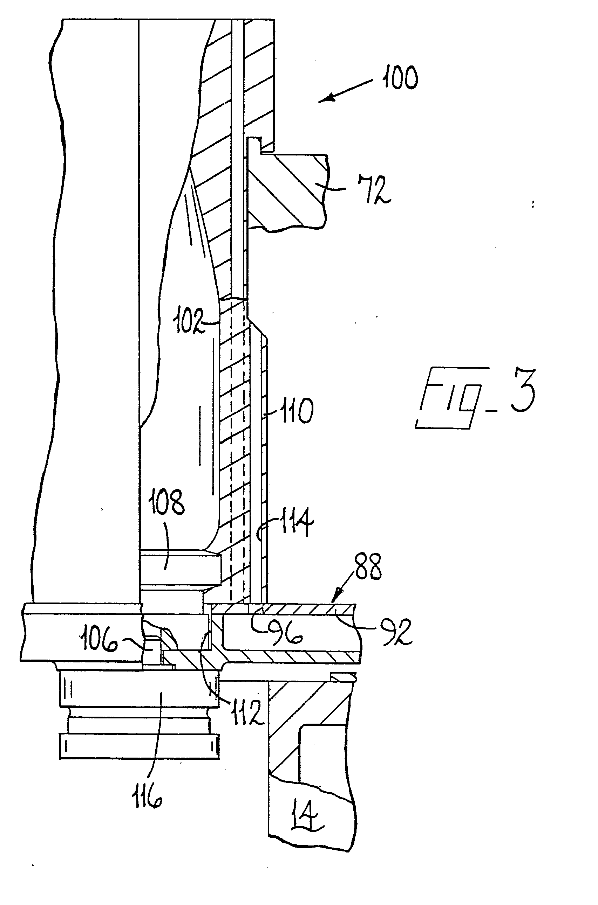

The second illustrative mould arrangement shown in Figure 3, comprises two moulds 100 which are of similar construction to the moulds 10 except that their bottom plates 108 do not extend beneath their side portions 110 being received in a recess 112 formed by the walls of a plenum chamber 88 which is above an adaptor plate 116. The mould 100 has a cavity 102 and a floating sealing member 106 is accommodated in the recess 112 to transmit vacuum to the bottom plate 108. The plenum chamber 88 extends in a horizontal plane, beneath the side portions 110 and has exits 96 in a sealing plate 92 thereof which, when the side portions are in their first, closed, position, communicate directly with entrances of the passages 114 in the side portions 110. If it is desired to cool the bottom plate 108 in the second illustrative mould arrangement, exits from the plenum chamber 88 may be formed in the side wall of the plenum chamber 88 around the recess 112 so that air may flow into cooling passages (not shown) in the bottom plate 108.

In variations of the first and second illustrative mould arrangements, the plenum chamber 18 or 88 may have exits which form nozzles which direct air on to external surfaces of the side portions 70 or 110 of the mould 10 or 100.

Furthermore, the valve means may not control the entrance to the plenum chamber but instead control the exit thereto. For example, a sliding plate can be provided beneath the sealing plate 52 or 92 and slide back and forth under the influence of a piston and cylinder assembly (for example) to open or close the exits 56 and 96 to the plenum chambers 18 and 88. Furthermore, mould arrangements according to the invention may have one sealing plate per plenum chamber and any desired number of plenum chambers each associated with one or more moulds. If, however, each plenum chamber is associated with one mould only, the advantage of individual control of the cooling of the mould is readily obtained. The plenum chamber exits may also communicate with the entrances of the cooling passages when the side portions 70 or 110 are in their second, open, position rather than their first, closed, position.

When a mould is to be changed in either first or the second illustrative mould arrangement, this can be done without difficulty, if necessary removing the sealing plate 52 or 92 and replacing it with another having a pattern of exits 56 or 96 appropriate to the new mould 10 or 100. If the new mould 10 or 100 is of different height, the adaptor plate 16 or 116 is raised or lowered by raising or lowering the bottom plate mechanism, taking with it the plenum chambers 18 or 88, with the tubes 22 sliding out of or into the arms 14.

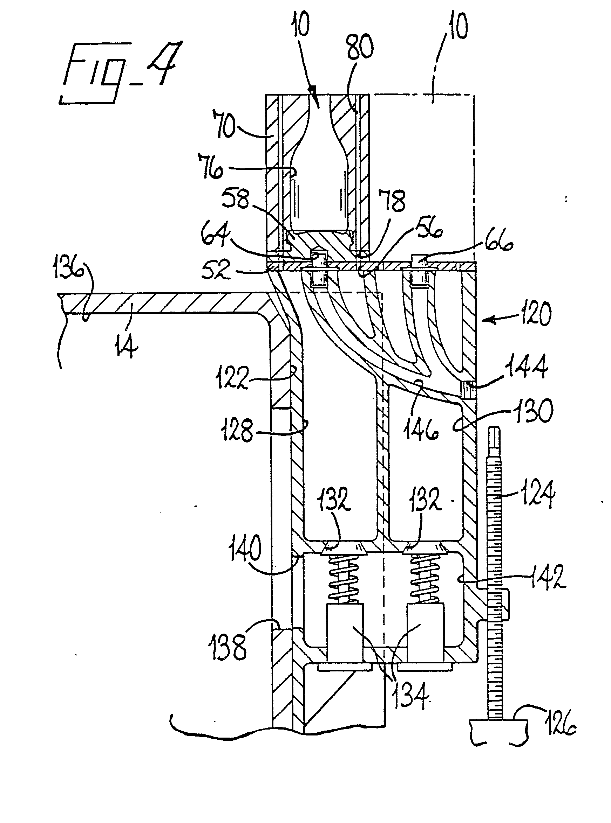

The third illustrative mould arrangement (shown in Figure 4) comprises two identical moulds 10 arranged side by side along a longitudinal axis of a section of a cyclicly operating glassware forming machine of the individual section type. Each mould comprises two side portions 70 which are mounted on supporting arms (not shown), which arms are movable by moving means (not shown), in conventional manner, to move the side portions 70 of each mould towards one another into a first, closed, position thereof (shown in Figure 1) or away from one another into a second, open, position thereof to allow moulded articles to be removed from the mould 10. Each mould also comprises a bottom plate 58 which rests on a sealing plate 52. The bottom plate 58 defines a bottom portion of a cavity 76 of the mould and the two side portions 70 define side portions of the cavity 76. In their first, closed, position the side portions 70 engage the bottom plate 58 and one another to co-operate in defining the mould cavity. The side portions 70 also define cooling passages 80 which pass upwardly through the mould side portions 70 and have entrances in a bottom surface of the side portion 70 which communicate via passages 78 in the bottom plate 58 with passages 56 through the sealing plate 52.

The sealing plate 52 forms part of a bottom plate plenum 120 which is mounted for vertical adjustment on the machine frame 14 of the machine. The mechanism 120 is mounted in a recess 122 in the frame 14. Vertical adjustment is by means of a screw 124 threadedly received in the mechanism 120 and bearing on a horizontal surface 126.

The mechanism 120 also comprises walls which define a first plenum chamber 128 and a second plenum chamber 130. Each of the plenum chambers 128, 130 extends downwards in the mechanism beneath one of the moulds 10 so that air supplied to the plenum chamber passes through the passages 56, 78, 80 and acts to cool the mould 10. At the bottom thereof each of the plenum chambers has an entrance 132 which can be opened or closed by means of a solenoid operated valve 134, there being one valve 134 associated with each plenum chamber so that air can be supplied independently to the respective plenum chambers 128 and 130. The third illustrative mould arrangement also comprises air supply means arranged to supply mould cooling air to the plenum chambers 128 and 130 for a predetermined period in each cycle of operation of the machine during which the side portions 70 are in their first, closed, position. The air supply means comprises a fan (not shown) operable to blow air into a chamber 136 within the frame 14 which borders the recess 122 and the air enters the mechanism 120 through an entrance 140 into the chamber 142 which contains the valves 134. When the valves 134 are in their open position, air can pass from the chamber 142 into the plenum chambers 128, 130. Thus, each plenum chamber 128, 130 has an entrance 132 which receives the air supplied by the air supply means and this air comes from a vertically-extending opening 138·in the frame 14.

The bottom plate mechanism 120 also comprises a connection 144 to a source of vacuum (not shown). The connection 144 is connected to the source of vacuum by means of a flexible pipe and is connected to the bottom plates of the moulds 10 by a branched tube 146 which passes through the plenum chambers 128 and 130 but is sealed therefrom. The branched pipe 146 communicates with a floating adaptor 66 which passes through a hole in the sealing plate and is received in a recess 64 in the bottom plate 58.

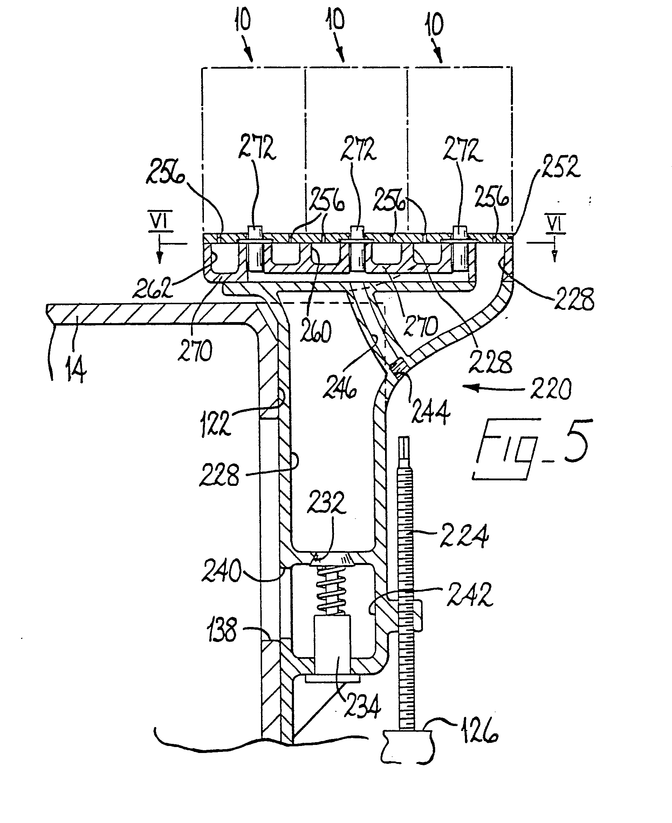

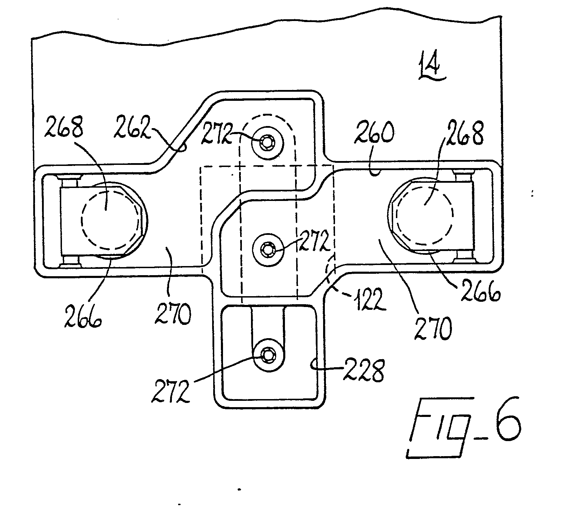

In the fourth illustrative mould arrangement, shown in Figures 5 and 6, the machine is arranged to operate in the triple gob mode. In this mode there are three moulds 10 arranged side by side. The three moulds 10 each have a bottom plate which is mounted on top of a sealing plate 252 and side portions (not shown) which are carried by moving means similar to those of the side portions 70 of the moulds of the first, second and third illustrative mould arrangements. The sealing plate 252 forms part of a bottom plate mechanism 220 which is mounted in the recess 122 in the frame 14 instead of the bottom plate mechanism 120. The bottom plate mechanism 220 is mounted on a slideway in the recess 122 for vertical adjustment by means of a screw 224 which bears on the surface 126. The mechanism 220 also comprises walls which define a single plenum chamber 228 which has an entrance 240 which communicates with the opening 138 in the frame 14. A valve 234 controls entry of air into the plenum chamber 228 through the entrance 232 from the chamber 242.

Above the top of the frame 14, two further plenum chambers 260 and 262 extend to beneath the centre mould 10 and the left hand mould (viewing Figure 5) moulds 10 respectively. These plenum chambers 260 and 262 are constructed in a similar manner to that described in the first and second illustrative mould arrangements and each extends beneath the side portions of its respective mould and has exits 264 which, when the respective side portions are in their first, closed, position, communicate with entrances of passages, in the side portions of the respective moulds 10. The plenum chambers 260, 262 are supplied with air by the air supply means through telescopic connections 266 to the interior of the frame 14 on opposite sides of the recess 122. As in the plenum chambers of the first and second illustrative mould arrangements, the entry of air into the plenum chambers 260 and 262 is controlled by flap valves 268 which act to open or close the entrances to the telescopic connections 266. The bottom walls 270 of the plenum chambers 260 and 262 overlie the plenum chamber 228 and prevent it from communicating with the left hand and central moulds 10.

The plenum chamber 228 extends to beneath the right hand (viewing Figure 5) mould 10 which has exits 256 which, when the side portions of the right hand moulds 10 are in their closed position, communicate with passages in those side portions so that air can enter these passages. The bottom plate mechanism 220 also comprises a connection 244 to a source of vacuum (not shown). The connection 244 is connected by a pipe 246 which passes through the plenum chamber 228 and is connected to the bottom plate of the three moulds 10 by branches passing upwardly through the plenum chambers 262, 260 and 228. Each of the branches of the pipe 246 terminates with an adaptor 272 which enters the bottom plate of the respective mould 10.

**Claims**

1. A mould arrangement for use in a cyclicly operating glassware forming machine, the arrangement comprising a mould (10; 100) comprising a bottom plate (58; 108) defining a bottom portion of a cavity (76; 102) of the mould in which molten glass is moulded in the operation of the machine, and two side portions (70; 110) defining side portions of the cavity, each side portion being movable in a cycle of operation of the machine to a first position thereof in which it engages the bottom plate and the other side portion to co-operate in defining the mould cavity so that moulding can take place and to a second position thereof in which the side portions are separated to allow moulded glass to be removed from the mould cavity, the side portions also defining cooling passages (80; 114) passing upwardly through the side portions through which air can pass to cool the side portions, characterised in that the cooling passages (80; 114) in each side portion (70; 110) each have an entrance in a bottom surface of that side portion and the mould arrangement also comprises a plenum chamber (18; 88; 128, 130; 228, 260, 262) extending beneath the first or the second position of each side portion and having one or more exits (56; 96; 256) which open upwardly and communicate, when the side portion is above the plenum chamber, either directly or through vertical passages (78) with the entrances of the cooling passages (80; 114) so that air is supplied to each cooling passage at substantially the same pressure, the plenum chamber also having an entrance (22; 132; 232) connected to air supply means operable to blow air into the plenum chamber.

2. A mould arrangement according to claim 1, characterised in that the mould arrangement comprises one plenum chamber (18; 88; 128, 130; 228, 260, 262) for each mould (10; 100) of the machine which extends beneath the first position of both side portions (70; 110) of the mould and has exits (56; 96; 256) which communicate with cooling passages (80; 114) in both side portions.

3. A mould arrangement according to either one of claims 1 and 2, characterised in that the mould arrangement comprises valve means (30; 134; 234) operable to open or close the entrance (22; 132; 232) or the exits (56; 96; 256) of the plenum chamber (18; 88; 128, 130; 228, 260, 262) to cause mould cooling air to leave the plenum chamber for a predetermined period in each cycle of operation of the machine, during which period the exits (56; 96; 256) communicate with the cooling passages (80; 114).

4. A mould arrangement according to any one of claims 1 to 3, characterised in that the cross-sectional area of the plenum chamber (18; 88; 128, 130; 228, 260, 262) transversely to the direction of air flow therein is at least three times the combined cross-sectional areas of the cooling passages (80; 114) supplied from the plenum chamber.

5. A mould arrangement according to any one of claims 1 to 4, characterised in that the air supply means is arranged to supply air to a chamber (19; 136) formed within a supporting frame of the machine, which chamber communicates with each plenum chamber (18; 88; 128, 130; 228, 260, 262) of the arrangement.

6. A mould arrangement according to any one of claims 1 to 5, characterised in that each cooling passage (80; 114) extends substantially in a straight line between its entrance and an exit thereof to atmosphere so that the mass flow of air in the passage is determined by the cross-sectional area and length of the passage and entrance and exit configurations of the passage.

7. A mould arrangement according to any one of claims 1 to 6, characterised in that the Reynolds number for the air flowing through the cooling passages (80; 114) is arranged to be greater than 10,000.

8. A mould arrangement according to any one of claims 1 to 7, characterised in that the air supply means is arranged to create a pressure of up to 2 lbs per square inch (1400 mm of water or 13729 Pa) at the exits (56; 96; 256) of the plenum chamber (18; 88; 128, 130; 228, 260, 262).

9. A mould arrangement according to any one of claims 1 to 8, characterised in that the exit or exits (56; 96; 256) of the plenum chamber are formed in a sealing plate (52; 92; 252) which is removably mounted on side wall portions of the plenum chamber.

10. A mould arrangement according to any one of claims 1 to 9, characterised in that the bottom plate (58; 108) is mounted on a bottom plate mechanism which is mounted for vertical adjustment on a supporting frame (14) of the machine and the plenum chamber (18; 88; 128, 130; 228, 260, 263) is also mounted on the bottom plate mechanism.

**Revendications**

1. Dispositif de moule destiné à être utilisé dans une machine à mouler le verre à fonctionnement cyclique, ce dispositif comprenant un moule (10; 100) qui comprend lui-même une plaque de base (58; 108) définissant une partie de base de la cavité (76; 102) du moule dans laquelle du verre fondu est moulé pendant le fonctionnement de la machine, et deux parties latérales (70; 110) définissant des parties latérales de la cavité, chaque partie latérale pouvant être amenée, dans un cycle de fonctionnement de la machine, à une première position dans laquelle elle est en appui contre la plaque de base et contre l'autre partie latérale afin de coopérer avec elles pour définir la cavité du moule, de sorte que le moulage peut s'effectuer, et à une deuxième position, dans laquelle les parties latérales sont espacées pour permettre d'extraire le verre moulé de la cavité du moule, les parties latérales définissant également des passages de refroidissement (80; 114) qui passent de bas en haut à travers les parties latérales et à travers lesquels de l'air peut passer pour refroidir les parties latérales, caractérisé en ce que les passages de refroidissement (80; 114) formés dans chaque partie latérale (70; 110) possèdent chacun une entrée formée dans la surface inférieure de cette partie latérale, et en ce que le dispositif de moule comprend également une chambre de distribution (18; 88; 128, 130; 228, 260, 262) s'étendant au-dessous de la première ou de la deuxième position de chaque partie latérale et possédant une ou plusieurs sorties (56; 96; 256) qui s'ouvrent vers le haut et qui, lorsque la partie latérale se trouve au-dessus de la chambre de distribution, communiquent, soit directement, soit à travers des passages verticaux (78), avec les entrées des passages de refroidissement (80; 114), de sorte que de l'air est fourni à peu près à la même pression à tous les passages de refroidissement, la chambre de distribution possédant également une entrée (22; 132; 232) reliée à des moyens d'alimentation en air pouvant être mis en action pour insuffler de l'air dans la chambre de distribution.

2. Dispositif de moule selon la revendication 1, caractérisé en ce que le dispositif de moule comprend une chambre de distribution (18; 88; 128; 130; 228; 260, 262) pour chaque moule (10; 100) de la machine, cette chambre s'étendant sous une première position des deux parties latérales (70; 110) du moule et possédant des sorties (56; 96; 256) qui communiquent avec des passages de refroidissement (80; 114) formés dans les deux parties latérales.

3. Dispositif de moule selon l'une quelconque des revendications 1 et 2, caractérisé en ce que le dispositif de moule comprend des moyens obturateurs (30; 134; 234) qui peuvent être actionnés pour ouvrir ou fermer l'entrée (22; 132; 232) ou les sorties (56; 96; 256) de la chambre de distribution (18; 88; 128; 130; 228, 260, 262) pour amener l'air de refroidissement des moules à sortir de la chambre de distribution pendant une période prédéterminée dans chaque cycle de fonctionnement de la machine, pendant laquelle les sorties (56; 96; 256) communiquent avec les passages de refroidissement (80; 114).

4. Dispositif de moule selon l'une quelconque des revendications 1 à 3, caractérisé en ce que l'aire de section de la chambre de distribution (18; 90; 128, 130; 228, 260, 262) mesurée transversalement à la direction de l'écoulement de l'air dans cette chambre, est au moins égale à trois fois la somme des aires de sections de passages de refroidissement (80; 114) alimentés à partir de la chambre de distribution.

5. Dispositif de moule selon l'une quelconque des revendications 1 à 4, caractérisé en ce que les moyens d'alimentation en air sont agencés pour acheminer de l'air à une chambre (19; 136) formée dans un bâti porteur de la machine, laquelle communique avec chaque chambre de distribution (18; 88; 128, 130; 228, 260, 262) du dispositif.

6. Dispositif de moule selon l'une quelconque des revendications 1 à 5, caractérisé en ce que chaque passage de refroidissement (80; 114) s'étend à peu près en ligne droite entre son entrée et sa sortie à l'atmosphère, de sorte que le dèbit massique d'air dans le passage est déterminé par l'aire de section transversal et la longueur du passage et par les configurations de l'entrée et de la sortie du passage.

7. Dispositif de moule selon l'une quelconque des revendications 1 à 6, caractérisé en ce qu'il est tel que le nombre de Reynolds pour l'air circulant dans les passages de refroidissement (83; 114) soit supérieur à 10.000.

8. Dispositif de moule selon l'une quelconque des revendications 1 à 7, caractérisé en ce que les moyens d'alimentation en air sont agencés pour créer une pression de jusqu'à 1.400 mm de hauteur d'eau ou 13.729 Pa (2 livres par pouce carré) aux sorties (56; 96; 256) de la chambre de distribution (18; 88; 128, 130; 228, 260, 262).

9. Dispositif de moule selon l'une quelconque des revendications 1 à 8, caractérisé en ce que la sortie ou les sorties (56; 96; 256) de la chambre de distribution sont formée dans une plaque de fermeture (52; 92; 252) qui est montée de façon amovible sur des parties de parois latérales de la chambre de distribution.

10. Dispositif de moule selon l'une quelconque des revendications 1 à 9, caractérise en ce que la plaque de base (58; 108) est montée sur un mécanisme de plaque de base qui est monté pour décrire un mouvement de réglage vertical sur un bâti porteur (14) de la machine et que la chambre de distribution (18; 88; 128, 130; 228, 260, 262) est également montée sur le méchanisme de la plaque de base.

**Patentansprüche**

1. Formanordnung für die Verwendung in einer zyklisch arbeitenden Glasformmaschine, mit einer Form (10; 100) mit einer Bodenplatte (58; 108), welche einem Bodenabschnitt eines Hohlraums (76, 102) der Form begrenzt, in dem bei arbeitender Maschine die Formgebung der Glasschmelze erfolgt, mit zwei Seitenabschnitten (70; 110), welche den Formhohlraum seitlich begrenzen und je in einem Arbeitszyklus der Maschine in eine erste Lage, in welcher er an der Bodenplatte und an dem jeweils anderen Seitenabschnitt anliegt, um gemeinsam den Formhohlraum zu begrenzen, so daß die Formgebung stattfinden kann, sowie ein eine zweite Lage bewegbar sind, in welcher die Seitenabschnitte voneinander getrennt sind, damit der Glasformling aus dem Formhohlraum entfernt werden kann, wobei die Seitenabschnitt auch Kühlkanäle (80, 114) begrezen, die sich aufwärts durch die Seitenabschnitte erstrecken und Luft führen, um die Seitenabschnitte zu kühlen, dadurch gekennzeichnet, daß die Kühlkanäle (80, 114) in jedem Seitenabschnitt (70, 110) jeweils einen Eingang in einer Bodenfläche des zugehörigen Seitenabschnittes aufweisen und die Formanordnung eine Sammelkammer (18; 88; 128, 130, 228, 260, 262) aufweist, die sich unter der ersten oder zweiten Lage jedes Seitenabschnittes erstreckt und einen oder mehrere Ausgänge (56; 96; 256) aufweist, die sich aufwärts öffnen und bei über der Sammelkammer befindlichem Seitenabschnitt direkt oder über vertikale Kanäle (78) mit den Eingängen der Kühlkanäle (80; 114) in Strömungsverbindung stehen, so daß jedem Kühlkanal Luft mit im wesentlichen dem gleichen Druck zugeführt wird, und daß die Sammelkammer einen Eingang (22; 132; 232) aufweist, der an eine Luftzuführeinrichtung angeschlossen ist; welche Luft in die Sammelkammer bläst.

2. Formanordnung nach Anspruch 1, gekennzeichnet durch eine Sammelkammer (18; 88; 128, 130; 228, 260, 262) für jede Form (10; 110) der Maschine, die sich unter der ersten Lage beider Seitenabschnitte (70; 110) der Form erstreckt und Ausgänge (56; 96; 256) aufweist, die mit Kühlkanälen (80; 114) in beiden Seitenabschnitten in Strömungsverbindung stehen.

3. Formanordnung nach Anspruch 1 oder 2, dadurch gekennzeichnet, daß die Formanordnung eine Ventileinrichtung (30; 134; 234) einschließt, die den Eingang (22; 132; 232) oder die Ausgänge (56; 96; 256) der Sammelkammer (18; 88; 128, 130; 228, 260, 262) öffnet oder schließt, damit Formkühlluft aus der Sammelkammer für eine vorbestimmte Zeitspanne innerhalb jedes Arbeitszyklus der Maschine austreten kann, während der die Ausgänge (56; 96; 256) in Strömungsverbindung mit den Kühlkanälen (80; 114) stehen.

4. Formanordnung nach einem der Ansprüche 1 bis 3, dadurch gekennzeichnet, daß der Querschnittsbereich der Sammelkammer (18; 88; 128, 130; 228, 260, 262) quer zur Richtung des Luftstromes in dieser mindestens das Dreifache des gesamten Querschnittsbereiches der Kühlkanäle (80; 114) beträgt, welche die Sammelkammer speist.

5. Formanordnung nach einem der Ansprüche 1 bis 4, dadurch gekennzeichnet, daß die Luftzuführeinrichtung so angelegt ist, daß sie Luft einer Kammer (19; 136) zuführt, die in einem Tragrahmen der Maschine ausgebildet ist, und welche mit jeder Sammelkammer (18; 88; 128, 130; 228, 260, 262) der Anordnung in Strömungsverbindung steht.

6. Formanordnung nach einem der Ansprüche 1 bis 5, dadurch gekennzeichnet, daß jeder Kühlkanal (80; 114) sich im wesentlichen geradlinig zwischen seinem Eingang und einem Ausgang zur Atmosphäre erstreckt, so daß die Luftmassenströmung im Kanal von dem Querschnittsbereich und der Länge des Kanals sowie von der Eingangs- und Ausgangsgestalt des Kanals bestimmt ist.

7. Formanordnung nach einem der Ansprüche 1 bis 6, dadurch gekennzeichnet, daß die Reynoldszahl für die durch die Kühlkanäle (80; 114) strömende Luft höher als 10.000 ist.

8. Formanordnung nach einem der Ansprüche 1 bis 7, dadurch gekennzeichnet, daß die Luftzuführeinrichtung so angelegt ist, daß sie an den Ausgängen (56; 96; 256) der Sammelkammer (18; 88; 128, 130; 228, 260, 262) einen Druck von bis zu 1400 mm WS (13729 Pa) erzeugt.

9. Formanordnung nach einem der Ansprüche 1 bis 8, dadurch gekennzeichnet, daß der Ausgang bzw. die Ausgänge (56; 96; 256) der Sammelkammer in einer Verschlußplatte (52; 92; 252) ausgebildet ist bzw. sind, welche abnehmbar an Seitenwandabschnitten der Sammelkammer angeordnet ist.

10. Formanordnung nach einem der Ansprüche 1 bis 9, dadurch gekennzeichnet, daß die Bodenplatte (58; 108) auf einer Bodenplattenanordnung vorgesehen ist, die vertikal einstellbar an einem Tragrahmen (14) angeordnet ist, und daß die Sammelkammer (18; 88; 128, 130; 228, 260, 262) ebenfalls an der Bodenplattenanordnung angeordnet ist.

*Fig_1*

0 102 820

FIg_2

0 102 820

*Fig_3*

Fig_4

Fig_5

Fig_6